# EUROPEAN PATENT APPLICATION

(11) **EP 3 670 031 A1**
(43) Date of publication of application: **24.06.2020**
(21) Application number: 18214140.8
(22) Date of filing: 19.12.2018
(51) Int. Cl.: B22F 3/105, B22F 3/15, C22C 1/04, B33Y 10/00, B33Y 30/00

(54) **METHOD AND SYSTEM FOR GENERATING A THREE-DIMENSIONAL WORKPIECE**

(71) Applicant: Linde GmbH, 82049 Pullach (DE)
(72) Inventor: Pauzon, Camille, 85764 Oberschleißheim (DE); Dubiez - Le Goff, Sophie, 81369 München (DE)

(57) **Abstract**

According to the present invention a method for generating a three-dimensional workpiece comprising the following steps:
producing a workpiece via additive manufacturing process, wherein Helium is used as a protective/shielding gas during the additive manufacturing process, and wherein a building rate is greater than 5 mm³/s, wherein the building rate is the product of a scanning speed * layer thickness * hatching distance.

## Description

The present invention relates to a method and a system for generating a three-dimensional workpiece.

The main differences between processes for additive manufacturing (AM) are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies. These additive manufacturing processes are summarized by the term laser powder bed fusion (L-PBF).

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in SLM the material is fully melted rather than sintered, allowing different properties (crystal structure, porosity, and so on). SLS involves the use of a high power laser (for example, a carbon dioxide laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed. Because finished part density depends on peak laser power, rather than laser duration, a SLS machine typically uses a pulsed laser.

Selective laser melting (DLMS) is a particular rapid prototyping, 3D printing, or Additive Manufacturing (AM) technique designed to use a high power-density laser to melt and fuse metallic powders together. In many SLM is considered to be a subcategory of Selective Laser Sintering (SLS). The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen at oxygen levels below 1000 parts per million. Once each layer has been distributed, each 2D slice of the part geometry is fused by selectively melting the powder. This is accomplished with a high-power laser beam, usually a fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Direct metal laser sintering (DMLS) is an additive manufacturing metal fabrication technology, occasionally referred to as selective laser sintering (SLS) or selective laser melting (SLM), that generates metal prototypes and tools directly from computer aided design (CAD) data. It is unique from SLS or SLM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a stl-file is created and sent to the machine's computer program. The DMLS machine uses a high-powered 400Watt Yb-fiber optic laser. Inside the build chamber area, there is a material dispensing platform and a built platform along with a recoater blade used to move new powder over the built platform. The technology fuses metal powder into a solid part by melting it locally using the focused laser beam. Parts are built up additively layer by layer, typically using layers 20 to 40 micrometers thick.

In general additive manufacturing is a manufacturing technology that includes a methodology whereby a heat source melts a feedstock of material which is deposited onto a substrate. Computer control of the movement of the heat source, and the source of the feedstock, makes it possible to build complex components. In additive manufacturing the processing is not limited to the above-mentioned methods in which metal powders are processed but composites or polymers are processed. The heat source can include (but is not limited to) the already mentioned laser beam, an arc, or other plasma-based heat sources.

Hot isostatic pressing (HIP) is a manufacturing process, used to reduce the porosity of metals and increase the density of many ceramic materials. This improves the material's mechanical properties and workability.

The HIP process subjects a component to both elevated temperature and isostatic gas pressure in a high pressure containment vessel. The pressurizing gas most widely used is argon. An inert gas is used so that the material does not chemically react. The chamber is heated, causing the pressure inside the vessel to increase. Many systems use associated gas pumping to achieve the necessary pressure level. Pressure is applied to the material from all directions (hence the term "isostatic").

It is an object of the present invention to provide a method and a system for generating a three-dimensional workpiece having higher quality, especially concerning density and ductility.

It is an object of the present invention to provide a method and a system for generating a three-dimensional workpiece faster.

One or more of these problems are solved by a method according to independent claim 1 and by a system according to independent claim 8. Advantageous embodiments are defined in the sub-claims.

According to the present invention a method for generating a three-dimensional workpiece comprising the following steps:
producing a workpiece via additive manufacturing process, wherein Helium is used as a protective/shielding gas during the additive manufacturing process, and wherein a building rate is greater than 5 mm³/s, wherein the building rate is the product of scanning speed * layer thickness * hatching distance.

The building rate can be greater than 5 mm³/s and less than 15 mm³/s or is between 5,5 mm³/s or is between 6 mm³/s and 14 mm³/s or is between 7 mm³/s and 13 mm³/s or is between 8 mm³/s and 12 mm³/s.
L-PBF machine build rates are mainly limited by the deposited powder layer thickness, the laser scanning speed and the nominal power of the laser. A typical layer thickness used is 30 µm. One of the challenges of the L-PBF is the development of parameters ensuring high quality parts (i.e. high density, ductility, etc.). A typical building rate (scanning speed * layer thickness * hatching distance) is about 5 mm³/s.

Ti-6AI-4V parts are mainly produced within the aerospace industry where high safety requirements apply. In conclusion, the production of Ti-6AI-4V parts may be relatively slow.

The inventors of the present invention have recognized that using a combination of Helium as a process gas, a high powder layer thickness which can be preferably greater than 40µm or greater than 45µm or greater than 50µm greater than 55µm or greater than 60µm or greater than 60µm and a building rate which is greater than 5 mm³/s and less than 15 mm³/s during additive manufacturing high density parts and an increased building rate is achieved.

Furthermore a layer thickness of 70µm up to 120µm or up to 110µm or up to 100µm or up to 90µm or up to 80µm can be achieved.

The additive Manufacturing is preferably a Laser Powder Bed Fusion Process comprising the following steps:
providing a metal powder on a built platform wherein the powder is made of Ti-6AI-4V so that the additive generated workpiece is made of Ti-6AI-4V,
melting the metal powder with a heat source, and
repeating the aforementioned steps.

Selective laser melting (SLM) is also known as direct metal laser sintering (DMLS) or laser powder bed fusion (LPBF) as discussed in the introductory part above.

The present invention covers the scope of L-PBF machines using preferably lasers (heat source) of nominal power up to 200W to 500W and preferably 400 W.

A typical build platform surface is about 400 cm² and building height is about 30 cm.

When using a building rate to about 12mm³/s an increased porosity in the workpiece occurs.

This residual porosity can be eliminated by Hot Isostatic Pressing (HIP). HIP combines high temperature and high pressure to compact the material and close the pores.

The gas trapped in this porosity can be the protective gas used during printing, for example Argon. If Argon is trapped inside the pores, HIP is not sufficient since Argon will not diffuse through the material of the workpiece. The pores will seem close after HIPing but will reopen under fatigue condition or high temperature operation (Thermal Induced Porosity phenomenon).

The inventors of the present invention have recognized that when pure Helium is used as shielding gas during printing and processing the workpiece afterwards with HIP a high density of the workpiece can be achieved.

When using Argon as a protective gas during additive manufacturing the Argon atoms are trapped inside the pores of the workpiece. After HIP the pores will reopen under fatigue condition or high temperature operation (Thermal Induced Porosity phenomenon). In contrast to this, when using Helium as a protective gas during additive manufacturing the Helium atoms are trapped inside the pores of the workpiece. After HIP the pores will not reopen under fatigue condition or high temperature operation (Thermal Induced Porosity phenomenon), since Helium as a small atom will diffuse through the material of the workpiece.

Helium is chemically inert and monatomic in all standard conditions. Because of helium's relatively low molar (atomic) mass, its thermal conductivity, specific heat, and sound speed in the gas phase are all greater than any other gas except hydrogen. For these reasons and the small size of helium monatomic molecules, helium diffuses through solids at a rate three times that of air and around 65% that of hydrogen.

With suitable laser- and build-parameters Helium can increase productivity and can also increase the porosity inside the part.

The invention combines the advantages of a higher productivity by using Helium during printing and
higher mechanical properties (especially fatigue) by achieving a full density after HIPing and pores will not reopen under fatigue conditions or high temperature operation (Thermal Induced Porosity phenomenon).

According to this the workpiece can be treated with a hot isostatic pressing process comprising the following steps:
heating the workpiece in a high pressure containment vessel, and
pumping a gas into the vessel for achieving a predetermined pressure level, wherein Helium diffuses out of the material of the workpiece so that a high density part is achieved.

Furthermore an oxygen trace analyser calibrated to the process gas (Helium) can be implemented into gas recirculation system so that a consistent residual oxygen level a build chamber is provided.

The hot isostatic pressing process can comprises additionally the following step: cooling the workpiece with decreasing pressure and temperature.

Modern HIP systems can feature uniform rapid cooling (URC) which circulates lower temperature gas to cool the part at a controlled rate of up to 100°C/min. The HIP quenching technique cuts cycle time dramatically by shortening the cooling stage by as much as 80%. It also provides the benefit of combining heat treatment with HIP in a single step. The uniform rapid cooling restricts grain growth and thermal distortion of the parts and avoids surface contamination by using high purity argon gas.

The gas for achieving a predetermined pressure level during the hot isostatic pressing process can be Argon or Nitrogen, and wherein a chosen temperature is below approx. 0.8 x T solidus, to avoid having a liquid phase in the workpiece.

Before starting the additive manufacturing process the production chamber can be purged with Helium.

Using Helium as shielding gas and high layer thickness presented in the invention, allow to increase
the standard building rate (about doubling it) and still achieve high density. Further building rates
increase can be achieved, introducing pores which can be removed by HIP.

Both parameter sets allow for significant reduction of the building time and thus the overall part
production (which include post process steps such as HIP).

According to a further aspect of the present invention a system for generating a three-dimensional workpiece is provided comprising:
a device for additive manufacturing comprising:
   a powder delivery system comprising a storage cylinder for etal powder and an application device for applying the powder onto a built platform,
   a heat source which is a device for generating a laser beam or a plasma or an arc for melting the powder, and a
   Production cylinder for additive manufacturing using metal powders comprising
a housing with a wall,
a lift table with a built platform disposed inside the wall of the housing,
wherein the wall of the housing and the built platform define a build space, and a device for feeding pure Helium to the manufacturing space is connected to the build space and/or to a process chamber of the device,
wherein the system is embodied for carrying out a building rate greater than 5 mm³/s, wherein the building rate is the product of a scanning speed * layer thickness * hatching distance.

The system is embodied for carrying out a method according to the present invention.

Furthermore an oxygen monitoring and controlling system is provided for recirculating the gas flow, wherein a consistent residual oxygen levels in the manufacturing space is kept via an oxygen trace analyzer, which is specifically calibrated to Helium and which is implemented into the gas recirculation.

Furthermore the System comprises
a device for hot isostatic pressing is provided comprising
a pressure vessel,
a heating device, and
a device for providing Argon to the pressure vessel

The device for hot isostatic pressing can comprise a compressor for building up the pressure, which is part of the device for providing Argon to the pressure vessel, and a uniform rapid cooling device which circulates lower temperature gas to cool the workpiece preferably at a controlled rate of up to 100°C/min.

The manufacturing space of the device for additive manufacturing to which the Helium is provided during additive manufacturing is a build space of a production cylinder defined by a wall of a housing of the production cylinder and a lift table with a built platform of a lift table disposed inside the wall of the housing, or in that the manufacturing space is a process chamber of an apparatus for additive manufacturing.

To ensure consistent residual oxygen levels in the build chamber an additional oxygen trace analyzer specifically calibrated to the process gas (Helium and He-Ar mixtures) can be implemented into a gas recirculation system of a machine A suitable oxygen monitoring and controlling system 18 and an oxygen monitoring and controlling system 19 system and method with a trace analyzer is disclosed for example in EP 3 075 470 A. This document is herewith incorporated by reference. EP 3 075 470 A discloses a method for producing a metallic workpiece in layers by additive manufacturing, in which metallurgical layers of the workpiece are produced by providing in each case a metallic material and a laser beam in a production chamber for each metallurgical layer, and during the application the layers of the metallic material in the production chamber, a gas atmosphere is provided. According to the invention, a part of the gas atmosphere is withdrawn as a gas stream from the production chamber, at least one parameter of the gas stream and/or the gas atmosphere determined and compared with a desired value. Depending on the comparison of the parameter with the desired value, the gas stream is returned to the production chamber and a process gas is supplied to the production chamber.

According to this monitoring system, part of the gas atmosphere is extracted from the manufacturing chamber in the form of a gas stream and fed to an analyzer. One or more parameters of the gas stream are determined in the analyzer. Since the gas atmosphere consists of inert Helium or Helium and Argon, it is frequently sensible to control the water vapor content of the gas stream or the oxygen content of the gas stream in order to determine if the gas atmosphere is still sufficiently inert. Otherwise, an undesirable formation of pores could take place in the interior of the workpiece.

The parameters such as, for example, the water vapor content or the oxygen content of the gas stream are measured and compared with a nominal value in the analyzer. If the measured parameters lie below the nominal value, i.e. if the water vapor content or the oxygen content lies below the predefined nominal value, the gas stream can be completely returned into the manufacturing chamber.

L-PBF machines rely on the following principle to establish their protective atmosphere. The chamber is purged with an inert gas (generally Argon or Nitrogen) to remove air. As soon as the machine detects less than a few thousands ppm of oxygen, it starts to recirculate the chamber's atmosphere. The recirculated gas flow is established by a pump. The pump power will depend on the operator input, whom sets a differential pressure. This differential pressure is measured after the pump. The pump power is increased until the desired pressure is achieved and kept constant. The process is then allowed to start.

For a given material and gas, the differential pressure is set to get a gas velocity of about 2,2 m/s. This allow for ensuring a clean laser - material interaction zone.

The gas can be recirculated via the gas recirculation system mentioned above, wherein a consistent residual oxygen levels in the manufacturing space is kept via an additional oxygen trace analyzer, which is specifically calibrated to the gas used and which is implemented into the gas recirculation.

The invention is explained below with the aid of an embodiment shown in the drawings. The drawing shows in:
- Figure 1: a rough schematic view of a device for additive manufacturing of a system for generating a three-dimensional workpiece according to the present invention,
- Figure 2: a rough schematic view of a device for hot isostatic pressing of a system for generating a three-dimensional workpiece according to the present invention,
- Figure 3: Cross section of a cube produced using Helium with a building rate of 11mm³/s,
- Figure 4: Cross section of a cube produced using Helium with a building rate of 9mm³/s, and
- Figure 5: Cross section of a cube produced using Helium with a building rate of 5mm3/s.

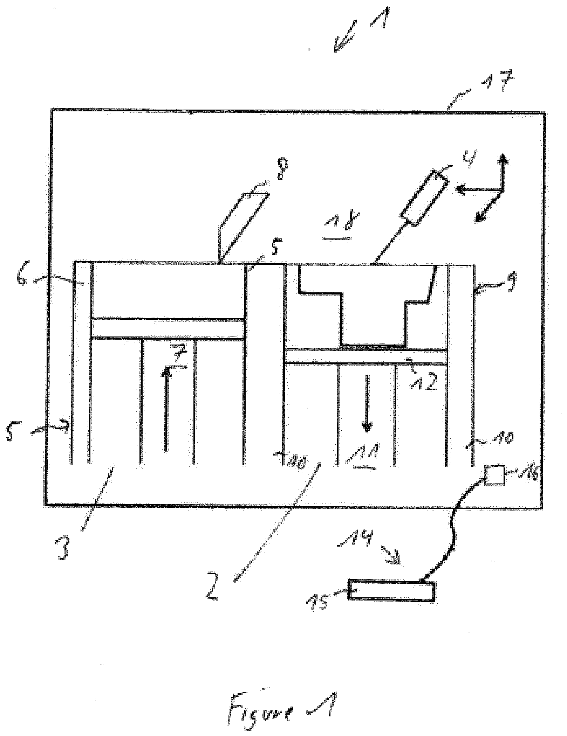

Hereinafter an apparatus for additive manufacturing 1 of a system for generating a three-dimensional workpiece according to the present invention is explained in detail (Figure 1).

The apparatus 1 comprises a production cylinder 2, a delivery cylinder 3 and a heat source 4.

The heat source 4 according to a preferred embodiment comprises a laser and a corresponding scanner system for melting metal powder (not shown).

The delivery cylinder 3 comprises a housing 5 with a wall 6 wherein a powder delivery piston 7 is disposed inside the housing 5.

A powder applying device 8, for example a roller, is provided for pushing a metal powder from the delivery cylinder 3 to the production cylinder 2.

The production cylinder 3 comprises a housing 9 with a wall 10.

A lift table 11 with a built platform 12 is disposed inside the wall 10 of the housing 9. The lift table 11 and the corresponding built platform 12 embody a fabrication piston.

The wall 10 of the housing 9 and the built platform 12 of the lift table 11 of the production cylinder 2 define a built space 13.

The built space 13 houses the fabrication powder bed and therefore the object being fabricated.

The built platform 12 can be an integral part of the lift table 11 of the fabrication piston or a separate part connected to the lift table 11.

Furthermore a processing chamber 17 is provided surrounding the production cylinder 2, the delivery cylinder 3 and the heat source 4.

The manufacturing space 18 according to the present invention is therefore the build space 13 of the production cylinder 2 defined by the 10 wall of the housing 9 of the production cylinder 2 and the lift table 11 with the built platform 12 disposed inside the wall 10 of the housing 9, and/or the manufacturing space is the room within the processing chamber 17.

Furthermore a device 14 for feeding pure Helium to the manufacturing space is connected to the processing chamber 17 of the apparatus 1.

The device 14 for feeding pure Helium comprises a storage vessel 15 for pure Helium and a feeding device 16 for feeding the Helium to the manufacturing space 18.

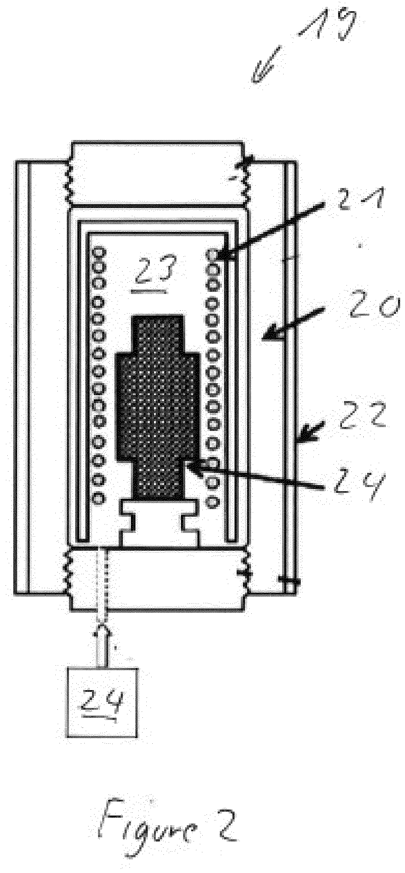

Hereinafter an apparatus for additive manufacturing 1 of a system for generating a three-dimensional workpiece according to the present invention is explained in detail (figure 2).

The device for hot isostatic pressing 19 comprises a pressure vessel 20, which is a high pressure cylinder.

A heating device 21 having heating coils is disposed in a housing 22 of the pressure vessel 20 surrounding a pressure space 23 in which a workpiece 24 is disposed. a device for providing Argon to the pressure vessel

Furthermore a device 24 for providing Argon to the pressure vessel is provided. A compressor (not shown) for building up the pressure can be part of the device for providing Argon to the pressure vessel.

A uniform rapid cooling device (not shown) which circulates lower temperature gas to cool the workpiece preferably at a controlled rate of up to 100°C/min is also provided.

During the hot isostatic pressing process, the temperature, argon-gas pressure and holding time will vary depending on the material types.

Unless otherwise stated, all technical features described in connection with the embodiments of the apparatus are applicable in connection with method steps for the method according to the present invention.

According to the present invention a method for generating a three-dimensional workpiece is provided.

In a first step a workpiece is formed by additive manufacturing preferably by a Laser Powder Bed Fusion Process comprising the following steps:
providing a metal powder on a built platform, wherein Helium is used as a protective/shielding gas during the additive manufacturing process,
melting the metal powder with a heat source, wherein Helium is trapped in pores of the material of the work piece, and
repeating the aforementioned steps.

As mentioned above the present invention uses the combination of Helium and high powder layer thickness, to achieve high density parts for increased building rate for example up to about 9 mm³/s. Table 1 displays the target parameters to do so.

**Table 1: Parameters window to achieve high density parts.**

| P (W) | v (mm/s) | h (mm) | t (µm) |
|---|---|---|---|
| 320 | 1034 | 0,13 | 70 |

The building rate can be further increased up to about 11 mm³/s by accepting an increased porosity that will later on be eliminated during the HIP step. Table 2**Fehler! Verweisquelle konnte nicht gefunden werden.** displays the target parameters to do so.

**Table 2: Parameters window to achieve increased porosity parts.**

| P (W) | v (mm/s) | h (mm) | t (µm) |
|---|---|---|---|
| 340 | 1200 | 0,13 | 70 |

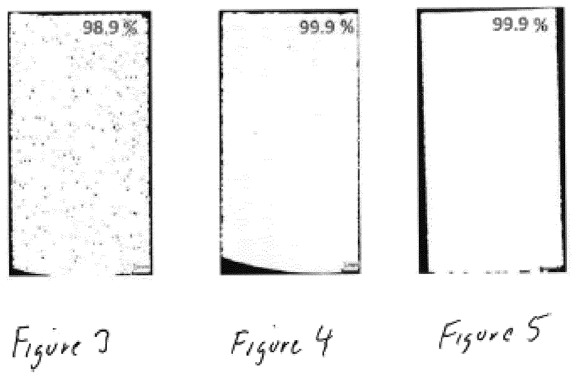

Figures 3 to 5 display the cross section and density of cubes produced under Helium for different building rates (BR). It shows that high density can still be achieved using layer thickness greater than two times the standard one. In addition, intermediate density is still achieved for this high layer thickness at higher speeds, increasing further the building rate.

Figure 3 shows a cube produced with a building rate of 11 mm³/s (V = 1200 mm/s and t = 70 µm) wherein a density of 98,9% is achieved.

Figure 4 shows a cube produced with a building rate of 9 mm3/s (V = 1034 mm/s and t = 70 µm) wherein a density of 98,9% is achieved.

Figure 3 shows a cube produced with a building rate of 5 mm3/s (V = 1200 mm/s and t = 30 µm) wherein a density of 98,9% is achieved.

By this method for additive manufacturing a part is built by selectively sintering or melting a material and building a part additively layer by layer using a heat source sintering or melting the material, wherein the process can be conducted in a process chamber which is fed with pure helium as a protective gas,

In a second step the workpiece is treated with a hot isostatic pressing process comprising the following steps:
heating the workpiece in a high pressure containment vessel, and
pumping Argon into the vessel for achieving a predetermined pressure level wherein
Helium diffuses out of the material of the workpiece so that a high density part is achieved,
cooling the workpiece with decreasing pressure and temperature.

After filling and closing, the HIP vessel is evacuated to eliminate the air. Then, while heating up, Argon gas pressure is increased in the vessel. After reaching the calculated pressure, the increase in pressure is done through gas thermal expansion. In the holding time, gas pressure and temperature are constant.

The additive manufacturing is carried out with a building rate which is greater than 5 mm³/s and less than 15 mm³/s or is between 5,5 mm³/s and 14 mm³/s or is between 6 mm³/s and 13 mm³/s or is between 7 mm³/s and 12 mm³/s.

Preferably Ti-6AI-4V parts are produced with a corresponding metallic powder.

Using a combination of Helium as a process gas, a high powder layer thickness and a building rate during additive manufacturing which is greater than 5 mm³/s and less than 15 mm³/s or is between 5,5 mm³/s and 14 mm³/s or is between 6 mm³/s and 13 mm³/s or is between 7 mm³/s and 12 mm³/s during additive manufacturing high density parts and an increased building rate is achieved.

After this, a rapid cooling takes place, with decreasing pressure and temperature.

When using Helium as a protective gas during additive manufacturing the Helium atoms are trapped inside the pores of the workpiece. After HIP the pores will not reopen under fatigue condition, since Helium as a small atom will diffuse through the material of the workpiece.

Helium is chemically inert and monatomic in all standard conditions. Because of helium's relatively low molar (atomic) mass, its thermal conductivity, specific heat, and sound speed in the gas phase are all greater than any other gas except hydrogen. For these reasons and the small size of helium monatomic molecules, helium diffuses through solids at a rate three times that of air and around 65% that of hydrogen.

A chosen temperature is below approx. 0.8 x T solidus, to avoid having a liquid phase.

The gas used is generally Argon but in special applications, other gases or gas mixtures are used.

The rise in pressure is built up with a compressor.
The gas pressure is equal inside and outside the insulation. But the gas density is higher outside the insulation than inside because of the lower temperature.

Modern HIP systems can feature uniform rapid cooling (URC) which circulates lower temperature gas to cool the part at a controlled rate of up to 100°C/min. The HIP quenching technique cuts cycle time dramatically by shortening the cooling stage by as much as 80%. It also provides the benefit of combining heat treatment with HIP in a single step. The uniform rapid cooling restricts grain growth and thermal distortion of the parts and avoids surface contamination by using high purity argon gas.

Molybdenum furnaces are used for temperatures up to 1350°C and carbon graphite/tungsten furnaces up to 2200°C. Inside the pressure vessel, insulation (ceramic fibers and Molybdenum sheets) is used to protect the steel pressure vessel against the heat and to hold the high temperature inside the insulation. The bottom, cover and pressure vessel are water cooled to protect the sealing ring and the vessel against the heat.

### List of Reference Numbers

- 1: device for additive manufacturing
- 2: production cylinder
- 3: delivery cylinder
- 4: heat source
- 5: housing
- 6: wall
- 7: powder delivery piston
- 8: powder applying device
- 9: housing
- 10: wall
- 11: lift table
- 12: built platform
- 13: build space
- 14: device for feeding Helium
- 15: storage vessel
- 16: feeding device
- 17: processing chamber
- 18: manufacturing space
- 19: device for hot isostatic pressing
- 20: pressure vessel
- 21: heating device
- 22: housing
- 23: pressure space
- 24: device for providing Argon

## Claims

1. Method for generating a three-dimensional workpiece comprising the following steps: producing a workpiece via additive manufacturing process, wherein Helium is used as a protective/shielding gas during the additive manufacturing process, and wherein a building rate is greater than 5 mm³/s, wherein the building rate is a product of a scanning speed * a layer thickness * a hatching distance.

2. Method according to claim 1, **characterized in that**, the building rate is greater than 5 mm³/s and less than 15 mm³/s or is between 5,5 mm³/s and 14 mm³/s or is between 6 mm³/s and 13 mm³/s or is between 7 mm³/s and 12 mm³/s.

3. Method according to claim 1 or 2, **characterized in that** the additive Manufacturing is a Laser Powder Bed Fusion Process comprising the following steps:
providing a metal powder on a built platform wherein the powder is made of Ti-6AI-4V so that the additive generated workpiece is made of Ti-6AI-4V,
melting the metal powder with a heat source, and repeating the aforementioned steps.

4. Method according to claims 1 to 3, **characterized in that** the workpiece is treated with a hot isostatic pressing process comprising the following steps:
heating the workpiece in a high pressure containment vessel, and
pumping a gas into the vessel for achieving a predetermined pressure level,
wherein Helium diffuses out of the material of the workpiece so that a high density part is achieved.

5. Method according to one of the claims 1 to 4, **characterized in that**, an oxygen trace analyzer calibrated to the process gas (Helium) is implemented into gas recirculation system of the additive manufacturing process so that a consistent residual oxygen level a build chamber is provided.

6. Method according to one of the claims 1 to 5, **characterized in that**, the hot isostatic pressing process comprises additionally the following step: cooling the workpiece with decreasing pressure and temperature.

7. Method according to one of the claims 1 to 6, **characterized in that**, the gas for achieving a predetermined pressure level during the hot isostatic pressing process is Argon or Nitrogen, and wherein a chosen temperature is below approx. 0.8 x T solidus, to avoid having a liquid phase in the workpiece.

8. System for generating a three-dimensional workpiece comprising: a device for additive manufacturing comprising: a powder delivery system comprising a storage cylinder for metal powder and an application device for applying the powder onto a built platform, a heat source which is a device for generating a laser beam or a plasma or an arc for melting the powder, and a Production cylinder for additive manufacturing using metal powders comprising a housing with a wall, a lift table with a built platform disposed inside the wall of the housing, wherein the wall of the housing and the built platform define a build space, and a device for feeding Helium to the manufacturing space is connected to the build space and/or to a process chamber of the device, wherein the system is embodied for carrying out a building rate greater, wherein the building rate is a product of a scanning speed * a layer thickness * a hatching distance.

9. System according to claim 8, **characterized in that**, the building rate is greater than 5 mm3/s and less than 15 mm3/s or is greater than 5,5 mm3/s and less than 13 mm3/s or is between 6 mm3/s and 12 mm3/s or, wherein the building rate is the product of a scanning speed * layer thickness * hatching distance.

10. System according to claims 8 or 9, **characterized in that**, the system is embodied for carrying out a method according to claims 1 to 7.

11. System according to claims 8 to 10, **characterized in that**, that an oxygen monitoring and controlling system is provided for recirculating the gas flow, wherein a consistent residual oxygen levels in the manufacturing space is kept via an oxygen trace analyzer, which is specifically calibrated to Helium and which is implemented into the gas recirculation.

12. System according to claims 8 to 11, **characterized in that**, that a device for hot isostatic pressing is provided comprising a pressure vessel, a heating device, and a device for providing Argon to the pressure vessel.

13. System according to claims 8 to 12, **characterized in that**, that the device for hot isostatic pressing further comprises a compressor for building up the pressure, which is part of the device for providing Argon to the pressure vessel, and a uniform rapid cooling device which circulates lower temperature gas to cool the workpiece preferably at a controlled rate of up to 100°C/min.

14. System according to claims 8 to 13, **characterized in that**, that the manufacturing space of the device for additive manufacturing is a build space of a production cylinder defined by a wall of a housing of the production cylinder and a lift table with a built platform of a lift table disposed inside the wall of the housing, or **in that** the manufacturing space is a process chamber of an apparatus for additive manufacturing.
